# EUROPEAN PATENT APPLICATION

(11) **EP 4 613 791 A1**
(43) Date of publication of application: **10.09.2025**
(21) Application number: 25156462.1
(22) Date of filing: 07.02.2025
(51) Int. Cl.: C08G 63/183, C09D 167/02

(54) **FILM-FORMING COMPOSITION AND FILM-COATED FABRIC FORMED FROM THE SAME**

(30) Priority: 06.03.2024 US 202463561997 P; 30.10.2024 TW 113141465
(71) Applicant: G-Fun Industrial Corporation, Taoyuan City 328454 (TW)
(72) Inventor: Chen, Kuo-Chin, 248020 New Taipei City (TW); Huang, Sung-Yun, 248020 New Taipei City (TW); Chang, Li-Hsun, 248020 New Taipei City (TW); Chen, Chun-An, 328454 Taoyuan City (TW); Chuang, Yu-Ping, 248020 New Taipei City (TW); Chen, Chia-Lin, 248020 New Taipei City (TW)
(74) Representative: Gille Hrabal Partnerschaftsgesellschaft mbB Patentanwälte

(57) **Abstract**

A film-forming composition includes a copolyester, a methyl etherified amino resin, and a solvent. The copolyester is formed by subjecting terephthalic acid, a saturated aliphatic dicarboxylic acid, ethylene glycol, and a saturated aliphatic diol to a copolymerization reaction, and has a glass transition temperature ranging from -20°C to 20°C. A film-coated fabric formed from the film-forming composition is also provided.

## Description

The present disclosure relates to a film-forming composition, and more particularly to a film-forming composition which includes a copolyester and a methyl etherified amino resin, and a film-coated fabric formed from the film-forming composition.

At present, a method for producing regenerated fibers from discarded clothing or waste fabrics requires use of fibrous materials containing either 100% single-component or not lower than 97% polyester. Only under such conditions can the fibrous materials undergo a physical recycling process (e.g., mechanical cutting or pulverizing followed by injection molding to allow pelletization), and/or a chemical recycling process (e.g., decolorization followed by alcoholysis and then polymerization) or other processes so as to produce regenerated fibers.

Moreover, fabrics made from the aforesaid fibrous materials containing not lower than 97% polyester often fall short of meeting requirements for resistance to hydrostatic pressure and twisting of textiles.

In view of the aforesaid, there is still a need to develop a material that can be utilized to prepare a fabric with relatively high resistance to hydrostatic pressure and twisting.

Therefore, an object of the present disclosure is to provide a film-forming composition and a film-coated fabric formed from the same, which can alleviate at least one of the drawbacks of the prior art.

According to an aspect of the disclosure, there is provided the film-forming composition according to claim 1.

According to an aspect of the disclosure, there is provided the film-coated fabric according to claim 11.

Other features and advantages of the disclosure will become apparent in the following detailed description of the embodiment(s) with reference to the accompanying drawings. It is noted that various features may not be drawn to scale.
FIG. 1 is an image illustrating a surface of the film-coated fabric of Example (EX) after flexing 1000 times as described in section B of "Property evaluation," *infra.*
FIG. 2 is an image illustrating a surface of the film-coated fabric of Comparative Example 4 (CE4) after flexing 1000 times as described in section B of "Property evaluation," *infra.*

For the purpose of this specification, it will be clearly understood that the word "comprising" means "including but not limited to", and that the word "comprises" has a corresponding meaning.

It is to be understood that, if any prior art publication is referred to herein, such reference does not constitute an admission that the publication forms a part of the common general knowledge in the art, in Taiwan or any other country.

Unless otherwise defined, all technical and scientific terms used herein have the meaning commonly understood by a person skilled in the art to which the present disclosure belongs. One skilled in the art will recognize many methods and materials similar or equivalent to those described herein, which could be used in the practice of the present disclosure. Indeed, the present disclosure is in no way limited to the methods and materials described.

The present disclosure provides a film-forming composition which includes a copolyester, a methyl etherified amino resin, and a solvent. The copolyester is formed by subjecting terephthalic acid, a saturated aliphatic dicarboxylic acid, ethylene glycol, and a saturated aliphatic diol to a copolymerization reaction. The copolyester has a glass transition temperature ranging from -20°C to 20°C.

In certain embodiments, the copolyester has a glass transition temperature ranging from -15°C to 15°C.

In certain embodiments, the saturated aliphatic dicarboxylic acid is selected from the group consisting of adipic acid, sebacic acid, and a combination thereof.

In certain embodiments, the saturated aliphatic diol is selected from the group consisting of diethylene glycol, neopentyl glycol, 2,2,4-trimethyl-1,3-pentanediol (abbreviated as TMPD), and combinations thereof.

According to the present disclosure, the methyl etherified amino resin serves as a crosslinking agent. In certain embodiments, the methyl etherified amino resin is methyl etherified melamine.

In certain embodiments, the film-forming composition further includes a coalescing agent which is selected from the group consisting of p-toluenesulfonic acid and dodecylbenzenesulfonic acid.

In certain embodiments, the film-forming composition further includes silicon dioxide which has a particle size ranging from 1 µm to 10 µm.

In certain embodiments, the terephthalic acid is present in an amount ranging from greater than 0 mol% to 60 mol%, based on a total amount of the terephthalic acid and the saturated aliphatic dicarboxylic acid as 100 mol%. In other embodiments, the terephthalic acid is present in an amount ranging from 50 mol% to 60 mol%, based on a total amount of the terephthalic acid and the saturated aliphatic dicarboxylic acid as 100 mol%.

In certain embodiments, the ethylene glycol is present in an amount ranging from greater than 0 mol% to 50 mol%, based on a total amount of the ethylene glycol and the saturated aliphatic diol as 100 mol%. In other embodiments, the ethylene glycol is present in an amount ranging from 40 mol% to 50 mol%, based on a total amount of the ethylene glycol and the saturated aliphatic diol as 100 mol%.

In certain embodiments, a weight ratio of the copolyester to the methyl etherified amino resin ranges from 50:3 to 50:7. In an exemplary embodiment, the weight ratio of the copolyester to the methyl etherified amino resin is 50:5.

The present disclosure also provides a film-coated fabric which includes a base fabric and a film coated on the base fabric. The film is formed by coating the aforesaid film-forming composition onto the base fabric, followed by conducting a crosslinking reaction.

In certain embodiments, the base fabric is a polyester fabric.

The disclosure will be further described by way of the following examples. However, it should be understood that the following examples are solely intended for the purpose of illustration and should not be construed as limiting the disclosure in practice.

### EXAMPLES

### Example (EX)

First, 83.065 kg (i.e., 500 mol) of terephthalic acid, 73.07 kg (i.e., 500 mol) of adipic acid (serving as a saturated aliphatic dicarboxylic acid), 31.035 kg (i.e., 500 mol) of ethylene glycol, 31.836 kg (i.e., 300 mol) of diethylene glycol (serving as a saturated aliphatic diol), 29.246 kg (i.e., 200 mol) of 2,2,4-trimethyl-1,3-pentanediol (abbreviated as TMPD, serving as a saturated aliphatic diol), and 0.36 mol of titanium(IV) butoxide (serving as a catalyst) were placed into a reactor, followed by mixing, and then the resultant mixture was subjected to an esterification reaction under a nitrogen atmosphere at a temperature of 240°C for a time period of 2 hours, so as to obtain a prepolymer. Next, 0.36 mol of titanium(IV) butoxide (serving as a catalyst) was added to the prepolymer, followed by conducting a copolymerization reaction at a pressure ranging from 1 torr to 10 torr (i.e., proximity to vacuum) and a temperature of 260°C for a time period of 6 hours, so as to obtain a copolyester of EX. Afterwards, the copolyester of EX was subjected to determination of glass transition temperature using a differential scanning calorimeter, acid value using an automatic titrator, and number average molecular weight using techniques well-known to those skilled in the art. The results showed that the copolyester of EX had a glass transition temperature of - 10°C, an acid value of 2.0 mg KOH/g, and a number average molecular weight of 26000 ± 2000.

Thereafter, the copolyester of EX was cooled to a temperature of 80°C, followed by slowly adding 239 kg of butanone thereto, so as to obtain a copolyester solution of EX. Afterwards, the copolyester solution of EX was subjected to determination of solid content and viscosity using techniques well-known to those skilled in the art. The results showed that the copolyester solution of EX had a solid content of approximately 50% and a viscosity of 5000 mPa·s ± 500 mPa·s.

Afterwards, 100 g of the copolyester solution of EX, 5 g of methyl etherified melamine (serving as a crosslinking agent, manufacturer: Allnex, model no.: CYMEL^{®} 303 LF), 0.4 g of p-toluenesulfonic acid (serving as a coalescing agent), 15 g of toluene (serving as a solvent), 5 g of silicon dioxide, and 0.05 g of polyether-modified polydimethylsiloxane (serving as a leveling agent) were mixed and stirred for a time period of 15 minutes, followed by filtering using a sieve with a mesh number of 150 mesh, so as to obtain a film-forming composition of EX. It should be noted that the silicon dioxide was subjected to determination of particle size using a laser scattering particle size analyzer and specific surface area using the Brunauer-Emmett-Teller (BET) method with a nitrogen gas as an adsorbed gas. The results showed that the silicon dioxide had a particle size ranging from 4 µm to 6 µm, and a specific surface area of approximately 130 m²/g. The film-forming composition of EX was subjected to determination of viscosity using techniques well-known to those skilled in the art. The results showed that the film-forming composition of EX had a viscosity of 3500 mPa·s ± 500 mPa·s.

A polyethylene terephthalate (PET) plain weave fabric (serving as a base fabric, fiber denier: 75 D × 75 D, basis weight: 102 g/m²) was subjected to a calendering process at a pressure of 100 kgf, a temperature of 150°C, and a speed rate of 25 m/min so as to obtain a calendered PET plain weave fabric. The film-forming composition of EX was then float-coated onto the calendered PET plain weave fabric at a speed rate of 10 m/min. During the float coating of the film-forming composition of EX, the calendered PET plain weave fabric was pressed down using a coating blade to 0.8 mm below a moving plane, so as to form a film that is coated on a surface of the calendered PET plain weave fabric (abbreviated as a pre-coated fabric). Subsequently, the pre-coated fabric was passed through an oven at a speed rate of 10 m/min for heating to allow the pre-coated fabric to undergo a crosslinking reaction, so as to obtain a film-coated fabric of EX having a dried film basis weight of 25.6 g/m². To be specific, the oven with a length of 20 m was set with a temperature gradient as follows: 90°C (from the 0^{th} m to the 4^{th} m of the length), 120°C (from the 4^{th} m to the 8^{th} m of the length), 130°C (from the 8^{th} m to the 12^{th} m of the length), 150°C (from the 12^{th} m to the 16^{th} m of the length), and 160°C (from the 16^{th} m to the 20^{th} m of the length).

### Comparative Example 1 (CE1)

The procedures and materials for preparing the film-coated fabric of CE1 were similar to those of EX, except that the methyl etherified melamine used in EX was replaced by poly(hexamethylene diisocyanate) (abbreviated as polyHDI, serving as an isocyanate crosslinking agent, manufacturer: Tai Chin Chemical Industry Co., Ltd., model no.: X-100).

### Comparative Example 2 (CE2)

The procedures and materials for preparing the film-coated fabric of CE2 were similar to those of EX, except that the methyl etherified melamine used in EX was replaced by a bisphenol A (BPA)-based liquid epoxy resin (manufacturer: Chang Chun Plastics Co., Ltd., model no.: BE-188).

### Comparative Example 3 (CE3)

The procedures and materials for preparing the film-coated fabric of CE3 were similar to those of EX, except that the methyl etherified melamine used in EX was replaced by a polycarbodiimide-based crosslinking agent (manufacturer: Nisshinbo Micro Devices Inc., model no.: CARBODILITE^{™} V-02B).

### Comparative Example 4 (CE4)

The procedures and materials for preparing the film-coated fabric of CE4 were similar to those of EX, except that the copolyester of EX was replaced by an amorphous saturated copolyester (manufacturer: Mitsubishi Chemical Corporation, model no.: TP-217, glass transition temperature: 40°C).

### Property evaluation

### A. Determination of resistance to hydrostatic pressure

The film-coated fabric of a respective one of EX and CE1 to CE3 was subjected to determination of resistance to hydrostatic pressure in accordance with the procedures set forth in the standard hydrostatic pressure test, i.e., ISO 811 (published in 2018). The results are shown in Table 1 below.

**Table 1**

| Film-coated fabric | Resistance to hydrostatic pressure (mmH₂O) |
|---|---|
| EX | 5600 |
| CE1 | 890 |
| CE2 | 950 |
| CE3 | 1000 |

Referring to Table 1, the resistance to hydrostatic pressure of the film-coated fabric of EX was up to 5600 mmH₂O, whereas the resistance to hydrostatic pressure of the film-coated fabric of a respective one of CE1 to CE3 was not greater than 1000 mmH₂O. These results indicate that the film-coated fabric of the present disclosure, which contains a film formed from the film-forming composition of EX, can exhibit relatively high resistance to hydrostatic pressure.

### B. Determination of resistance to twisting

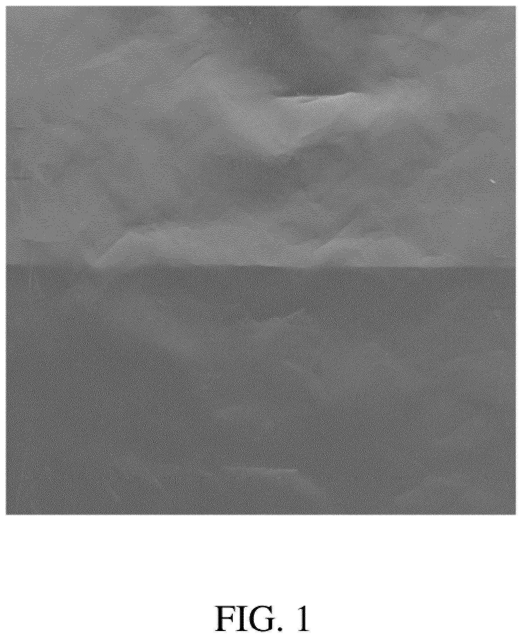

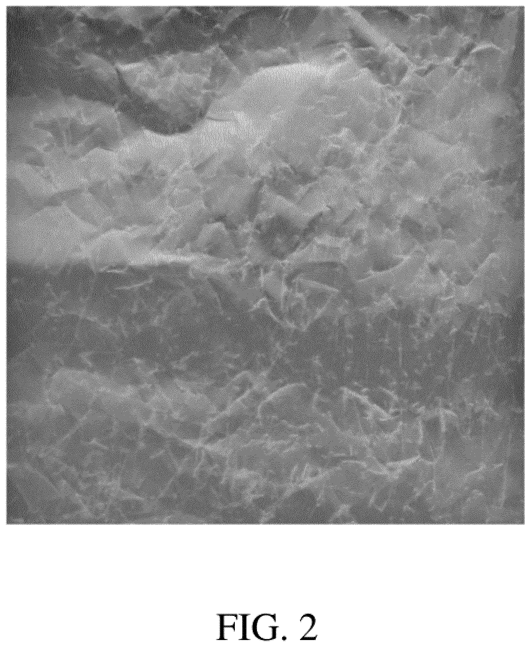

The film-coated fabric of EX and CE4 were subjected to determination of resistance to twisting by flexing 1000 times in accordance with the procedures set forth in ISO 7854 method C (published in 2019), followed by photography, so as to obtain two images as shown in FIG. 1 and FIG. 2, respectively.

Referring to FIGS. 1 and 2, a surface of the film-coated fabric of EX that had been flexed 1000 times was relatively smooth as shown in FIG. 1, whereas a surface of the film-coated fabric of CE4 that had been flexed 1000 times clearly showed numerous creases. These results demonstrate that the film-coated fabric of the present disclosure, which contains a base fabric and a film that is formed from the film-forming composition of EX and that is coated on the base fabric, exhibits relatively high resistance to twisting, and thus the film thereof is less likely to peel off from the base fabric thereof.

Summarizing the above test results, it is clear that by virtue of the materials (including the copolyester, the methyl etherified amino resin, and the solvent) used for preparing the film-forming composition, the film-coated fabric which contains the film formed from the film-forming composition of the present disclosure can exhibit relatively high resistance to hydrostatic pressure and twisting. In addition, since the film-coated fabric of the present disclosure is primarily made of polyester, such film-coated fabric can be easily recycled by a physical recycling process, and/or a chemical recycling process or other processes, so as to produce regenerated fibers.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, the one or more features may be singled out and practiced alone without the another one or more features or specific details. It should be further noted that one or more features or specific details from one embodiment may be practiced together with one or more features or specific details from another embodiment, where appropriate, in the practice of the disclosure.

## Claims

1. A film-forming composition, **characterized by**:
a copolyester which is formed by subjecting terephthalic acid, a saturated aliphatic dicarboxylic acid, ethylene glycol, and a saturated aliphatic diol to a copolymerization reaction and which has a glass transition temperature ranging from -20°C to 20°C;
a methyl etherified amino resin; and
a solvent.

2. The film-forming composition as claimed in claim 1, wherein the copolyester has a glass transition temperature ranging from -15°C to 15°C.

3. The film-forming composition as claimed in any one of claims 1 and 2, wherein the saturated aliphatic dicarboxylic acid is selected from the group consisting of adipic acid, sebacic acid, and a combination thereof.

4. The film-forming composition as claimed in any one of claims 1 to 3, wherein the saturated aliphatic diol is selected from the group consisting of diethylene glycol, neopentyl glycol, 2,2,4-trimethyl-1,3-pentanediol, and combinations thereof.

5. The film-forming composition as claimed in any one of claims 1 to 4, wherein the methyl etherified amino resin is methyl etherified melamine.

6. The film-forming composition as claimed in any one of claims 1 to 5, further comprising a coalescing agent which is selected from the group consisting of p-toluenesulfonic acid and dodecylbenzenesulfonic acid.

7. The film-forming composition as claimed in any one of claims 1 to 6, further comprising silicon dioxide which has a particle size ranging from 1 µm to 10 µm.

8. The film-forming composition as claimed in any one of claims 1 to 7, wherein the terephthalic acid is present in an amount ranging from greater than 0 mol% to 60 mol%, based on a total amount of the terephthalic acid and the saturated aliphatic dicarboxylic acid as 100 mol%.

9. The film-forming composition as claimed in any one of claims 1 to 8, wherein the ethylene glycol is present in an amount ranging from greater than 0 mol% to 50 mol%, based on a total amount of the ethylene glycol and the saturated aliphatic diol as 100 mol%.

10. The film-forming composition as claimed in any one of claims 1 to 9, wherein a weight ratio of the copolyester to the methyl etherified amino resin ranges from 50:3 to 50:7.

11. A film-coated fabric, **characterized by** a base fabric and a film coated on the base fabric, the film being formed by coating the film-forming composition as claimed in any one of claims 1 to 10 onto the base fabric, followed by conducting a crosslinking reaction.

12. The film-coated fabric as claimed in claim 11, wherein the base fabric is a polyester fabric.
